# EUROPÄISCHE PATENTANMELDUNG

(11) **EP 1 154 598 A2**
(43) Veröffentlichungstag der Anmeldung: **14.11.2001**
(21) Anmeldenummer: 01110892.5
(22) Anmeldetag: 05.05.2001
(51) Int. Cl.: H04L 12/40, H04B 1/20, B60R 16/02

(54) **Kommunikationssystem für Fahrzeuge**

(30) Priorität: 08.05.2000 DE 10022233
(71) Anmelder: Hella KG Hueck & Co., 59552 Lippstadt (DE)
(72) Erfinder: Geske, Carsten, 59320 Ennigerloh (DE); Kolkmann, Dieter, 33378 Rheda-Wiedenbrück (DE); Kraft, Stefan, 59581 Warstein (DE); Müller, Bernhard, 59823 Arnsberg (DE); Schmees, Siegfried, 59590 Geseke (DE); Wurth, Mathias, 59558 Lippstadt (DE)

(57) **Zusammenfassung**

Kommunikationssystem für Fahrzeuge mit mehreren über einen seriellen Bus miteinander verbundenen Kommunikationsteilnehmern, die jeweils eine Steuereinheit zum Senden und/oder Empfangen von Informationsdaten und eine Kommunikationsschnittstelle aufweisen, wobei die Informationsdaten in einem Kommunikationsprotokoll übertragen werden und wobei das Kommunikationsprotokoll Kennungsdaten aufweist, anhand derer die Zuordnung der Informationsdaten zu den jeweiligen Kommunikationsteilnehmern erfolgt, wobei mindestens zwei Kommunikationsteilnehmer mit einer elektrischen Eingabeeinheit oder Ausgabeeinheit gekoppelt sind zur Eingabe bzw. Ausgabe von Audiodaten, die als Informationsdaten von einer Steuereinheit eines Kommunikationsteilnehmers über den Bus zu einer Steuereinheit eines anderen Kommunikationsteilnehmers übertragbar sind, und dass zumindest der Steuereinheit desjenigen Kommunikationsteilnehmers, der die Audiodaten empfangen soll, ein Audiodaten-Sammelspeicher zugeordnet ist, der derart ansteuerbar ist, dass die in einer vorgegebenen Anzahl von Kommunikationsprotokollen enthaltenen empfangenen Audiodaten zwischengespeichert sind und dass die Audiodaten nach einer vorgegebenen Verzögerungszeit an die Ausgabeeinheit übertragen werden.

## Beschreibung

Die Erfindung betrifft ein Kommunikationssystem für Fahrzeugemit mehreren über einen seriellen Bus miteinander verbundenen Kommunikationsteilnehmern, die jeweils eine Steuereinheit zum Senden und/oder Empfangen von Informationsdaten und eine Kommunikationsschnittstelle aufweisen, wobei die Informationsdaten in einem Kommunikationsprotokoll übertragen werden und wobei das Kommunikationsprotokoll Kennungsdaten aufweist, anhand derer die Zuordnung der Informationsdaten zu den jeweiligen Kommunikationsteilnehmern erfolgt.

In Fahrzeugen ist es bekannt, Audiodaten, beispielsweise Sprach- oder Musiksignale, von einem elektroakustischen Umsetzer (Mikrofon) über eine Ansteuereinheit und eine Leitung direkt zu einem weiteren elektroakustischen Umsetzer (Lautsprecher) zu übertragen. Zu diesem Zweck sind die Lautsprecher über eine gesonderte Leitung mit der Ansteuereinheit verbunden, was insbesondere bei einer hohen Anzahl von verteilt angeordneten Lautsprechern, wie beispielsweise in Flugzeugen, Bussen oder Eisenbahnen zu einem erheblichen Kabelaufwand führt.

Es sind zwar in Fahrzeugen serielle Bussysteme vorhanden, mittels derer Steuerdaten von einem Sensor zu einem vorgegebenen Aktor übertragen werden. Hierdurch kann die Anzahl der Steckverbindungen und Leitungen verringert werden. Bei diesem Bussystem handelt es sich überwiegend um ein asynchron arbeitendes Kommunikationssystem, bei dem der Zugriff auf den Bus und damit die Übertragung von Informationsdaten ereignisgesteuert abläuft, das heißt, der Zugriff auf den Bus erfolgt auf Anforderung eines von mehreren an dem Bus angeschlossenen Kommunikationsteilnehmers. Für eine zufriedenstellende Übertragung von Audiodaten sowie eine verzerrungsfreie Wiedergabe derselben ist ein solches Kommunikationssystem in der herkömmlichen Ausgestaltung nicht geeignet.

Aufgabe der vorliegenden Erfindung ist es daher, ein Kommunikationssystem für Fahrzeuge derart weiterzubilden, dass mit relativ geringem Aufwand eine zuverlässige und sichere Übertragung von Steuerdaten einerseits und Audiodaten anderseits gewährleistet ist.

Zur Lösung dieser Aufgabe ist die Erfindung in Verbindung mit dem Patentanspruch 1 dadurch gekennzeichnet, dass mindestens zwei Kommunikationsteilnehmer mit einer elektrischen Eingabeeinheit oder Ausgabeeinheit gekoppelt sind zur Eingabe bzw. Ausgabe von Audiodaten, die als Informationsdaten von einer Steuereinheit eines Kommunikationsteilnehmers über den Bus zu einer Steuereinheit eines anderen Kommunikationsteilnehmers übertragbar sind, und dass zumindest der Steuereinheit desjenigen Kommunikationsteilnehmers, der die Audiodaten empfangen soll, ein Audiodaten-Sammelspeicher zugeordnet ist, der derart ansteuerbar ist, dass die in einer vorgegebenen Anzahl von Kommunikationsprotokollen enthaltenen empfangenen Audiodaten zwischengespeichert sind und dass die Audiodaten nach einer vorgegebenen Verzögerungszeit an die Ausgabeeinheit übertragen werden.

Vorteilhaft wird nach der Erfindung ein serielles Bussystem zur Übertragung von Audiodaten eingesetzt. Durch das Vorsehen eines zumindest der Steuereinheit eines empfangenen Kommunikationsteilnehmers zugeordneten Audiodaten-Sammelspeichers können die im Bus zeitdiskontinuierlich vorliegenden Audiodaten gesammelt bzw. zwischengespeichert werden, so dass sie nachfolgend in einem konstanten zeitlichen Abstand quasi zeitkontinuierlich an eine vorgegebene, mit dem Kommunikationsteilnehmer verbundene Ausgabeeinheit zur Ausgabe derselben weitergegeben werden können. Eine unerwünschte Verzerrung des ausgegebenen Audiosignals kann dadurch vermieden werden. Vorteilhaft kann das serielle Bussystem sowohl zur Übertragung von Steuerals auch von Audiodaten dienen. Es kann mit geringem Kabelaufwand eine relativ gute Klangqualität gewährleistet werden. Grundgedanke der Erfindung ist es, die Startzeit der Ausgabe von Audiosignalen um eine solche Verzögerung zeitlich zu verschieben, dass nach dem diskontinuierlichen Sammeln der Audiodaten eine ununterbrochen und fortlaufende Wiedergabe derselben ermöglicht wird. Dabei dient der Audiodaten-Sammelspeicher quasi als Reservoir für die diskreten Audiodaten, aus dem ein zeitkontinuierlicher Datenabfluss erfolgen kann.

Nach einer bevorzugten Ausführungsform der Erfindung ist der Audiodaten-Sammelspeicher als Stapelspeicher ausgebildet, aus dem die zuerst eingeschriebenen Audiodaten nach einer vorgegebenen Verzögerungszeit als erstes wieder ausgelesen werden. Dabei erfolgt der Zugriff auf die Speicherzellen des Stapelspeichers mittels eines programmierbaren Schreib- und Lesezeigers, wobei deren Zugriff auf die Speicherzellen um die vorgegebene Verzögerungszeit zeitlich versetzt erfolgt. Hierdurch kann auf programmtechnisch einfach zu realisierende Weise ein zeitequidistantes sequentielles Auslesen der Audiodaten erzielt werden.

Nach einer besonderen Ausführungsform der Erfindung enthalten die die Audiodaten aufweisenden Kommunikationsprotokolle eine höhere Zugriffspriorität auf den Bus als die die Steuerdaten enthaltenden Kommunikationsprotokolle. Hierdurch wird ein Auffüllen des Audiodaten-Sammelspeichers begünstigt bzw. einer unerwünschten Blockierung des Busses infolge des Absendens von Steuerdaten entgegengewirkt.

Nach einer Weiterbildung der Erfindung werden in vorgegebenen Zeitintervallen von einem Kommunikationsteilnehmer Synchronisationsprotokolle abgesendet, die ein Synchronisieren der Steuereinheit der Kommunikationsteilnehmer bewirken. Durch diese Maßnahme kann der zeitliche Abstand zwischen dem Schreibzeiger und dem Lesezeiger festgelegt werden.

Ein Ausführungsbeispiel der Erfindung wird nachfolgend anhand der Zeichnungen näher erläutert.

Es zeigen:
- Figur 1: ein Blockschaltbild eines Kommunikationssystems,
- Figur 2: ein Zeitdiagramm von Informationsdaten, die von einem ersten Kommunikationsteilnehmern über den Bus an einen oder mehrere weitere Kommunikationsteilnehmer übertragen werden und
- Figur 3: ein Blockschaltbild eines Audiodaten-Sammelspeichers.

Das erfindungsgemäße Kommunikationssystem findet insbesondere in Fahrzeugen Anwendung, in denen eine Mehrzahl von verteilt angeordneten Ausgabeeinheiten für Audiosignale, wie beispielsweise Sprach- oder Musiksignale, vorgesehen sind. Neben räumlich komplexen Fahrzeugen wie Flugzeugen, Reisebussen oder schienengebundene Fahrzeugen kann das Kommunikationssystem auch in Kraftfahrzeugen relativ kleiner Länge (PKW) eingesetzt werden. Hierbei kann vorteilhaft die kürzere elektrische Verbindungsleitung zwischen den die Audiodaten sendenden Kommunikationsteilnehmer und den die Audiodaten empfangenden Kommunikationsteilnehmer zur Erhöhung der Klangqualität genutzt werden.

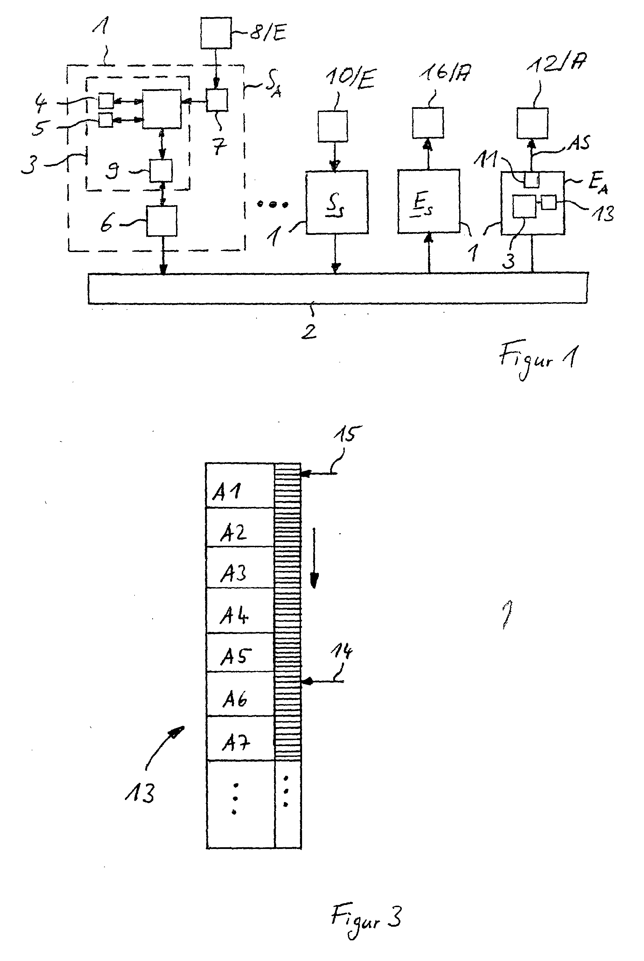

Figur 1 zeigt ein Kommunikationssystem mit einer Mehrzahl von Kommunikationsteilnehmern 1, die über einen Bus 2, der als CAN-Bus ausgebildet ist, miteinander verbunden sind. Die Kommunikationsteilnehmer 1 weisen jeweils eine Steuereinheit 3 mit einem Speicher 4 und einem Taktgeber 5 auf, die selbstständig digitale Daten verarbeiten kann. Zu diesem Zweck weist die Steuereinheit 3 einen Mikroprozessor auf. Der Speicher 4 weist einen Festwertspeicher und einen flüchtigen Speicher (RAM) auf. Über eine Pegelanpassungseinheit 6 ist die Steuereinheit 3 mit dem Bus 2 verbunden. Die Steuereinheit 3 weist Mittel auf, so dass ein bidirektionaler Datentransfer zwischen der Steuereinheit 3 einerseits und dem Bus 2 andererseits ermöglicht wird.

An dem Bus 2 sind unterschiedliche Typen von Kommunikationsteilnehmer 1 angeschlossen. Ein erster Kommunikationsteilnehmer 1 ist als Sender S_{A} ausgebildet, der über einen Analog/Digital-Wandler 7 mit einem als Mikrofon ausgebildeten elektroakustischen Umsetzer 8 als Eingabeeinheit E verbunden ist. Vorzugsweise ist der Analog/Digital-Wandler 7 in dem Sender S_{A} integriert angeordnet.

Die akustischen Signale, beispielsweise Sprachsignale in einem Flugzeug - dabei kann es sich um eine Ansage des Flugzeugkapitäns an die Passagiere handeln - werden in dem Mikrofon 8 in elektrische Signale umgewandelt und stehen der Steuereinheit 3 des Senders S_{A} als digitale Audiodaten zur Verfügung. Zur Übertragung der Audiodaten zu einem weiteren Kommunikationsteilnehmer 1, der als Empfänger E_{A} ausgebildet ist, wird in einer Kommunikationsschnittstelle 9 ein Kommunikationsprotokoll erzeugt, das neben den Audiodaten einen die Nachricht identifizierenden Kennungscode sowie gegebenenfalls weitere redundante Plätze für Steuerungsinformationen aufweist. Der Bus 2 ermöglicht die bitserielle Übertragung von Informationsdaten, wobei in einem Kommunikationsprotokoll jeweils ein Datenfeld von acht 1-Byte langen Informationsdaten enthalten ist. Die Informationsdaten können zum einen Audiodaten sein und zum anderen Steuerdaten, die von einem Sender Sₛ in den Bus 2 eingespeist werden. Ein solche Sender Sₛ ist mit einem Sensor 10 verbunden, der als Schalter ausgebildet sein kann, beispielsweise ein Anforderungsschalter am Platz des Passagiers. Die in dem Sender Sₛ erzeugten Steuerdaten können dann als in dem Kommunikationsprotokoll enthaltene Informatiönsdaten über den Bus 2 an einen Empfänger (Kommunikationsteilnehmer) Eₛ übertragen werden, der mit einer Ausgabeeinheit A, 16 verbunden ist. Diese Ausgabeeinheit 16 kann in dem vorliegenden Beispiel eine Signalleuchte sein, die dem Flugzeugpersonal signalisiert, dass der entsprechende Passagier eine Auskunft benötigt. Alternativ kann die Ausgabeeinheit 16 auch als Aktor ausgebildet sein, der beispielsweise eine Tür des Flugzeugs betätigt.

Im vorliegenden Beispiel dienen das Mikrofon 8 und der Sensor 10 als Eingabeeinheit E für den Kommunikationsteilnehmer 1. Der Empfänger E_{A} ist über einen integrierten Digital/Analog-Wandler 11 mit einem Lautsprecher 12 als Ausgabeeinheit A gekoppelt. Hierdurch können die von dem Sender S_{A} abgesandten Audiodaten empfangen, weiterverarbeitet und in den Lautsprecher 12 als akustisches Signal AS ausgegeben werden.

An den Bus 2 können eine Vielzahl von solchen Kommunikationsteilnehmern 1, insbesondere eine Vielzahl von Empfängern E_{A} angeschlossen werden. Die Kommunikationsteilnehmer 1 sind dezentral angeordnet und im Wesentlichen gleich ausgebildet. Sie unterscheiden sich in ihrer Funktion im Wesentlichen durch die Kopplung mit einer bestimmten Eingabeeinheit E bzw. Ausgabeeinheit A.

Damit neben der Übertragung von Steuerdaten auch eine verzerrungsfreie und klanglichen Ansprüchen genügende Übertragung von Audiodaten ermöglicht wird, ist der Steuereinheit 3 des Empfängers E_{A} ein Audiodaten-Sammelspeicher 13 zugeordnet. Wie aus Figur 3 zu ersehen ist, weist der Audiodaten-Sammelspeicher 13 ein Fassungsvermögen für Audiodaten von mindestens zwei Kommunikationsprotokollen auf, wobei jedes Kommunikationsprotokoll eine Datenlänge von 8 Byte aufweist. Der Audiodaten-Sammelspeicher 13 ist als Stapelspeicher ausgebildet, dessen Speicherzellen mittels eines Schreibzeigers14 und eines Lesezeigers 15 zugegriffen werden können. In der Steuereinheit 3 des Empfängers E_{A} ist ein Zugriffssteuerprogramm oder eine Zugriffssteuerroutine enthalten, mittels derer der Lese- und Schreibzugriff programmgemäß gestaltet werden kann.

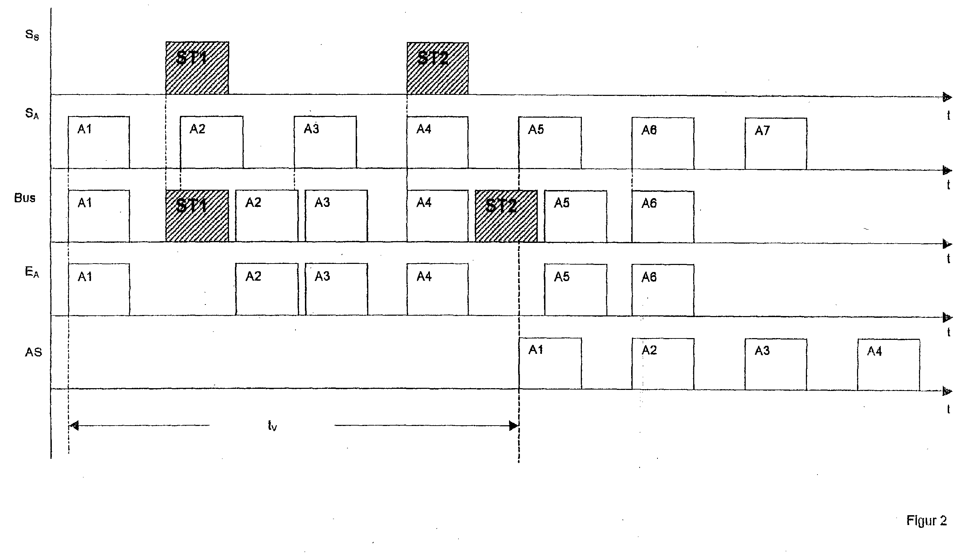

Damit die Informationsdaten (Audiodaten oder Steuerdaten) auf den Bus 2 gegeben werden können, weist die Kommunikationsschnittstelle 9 eine Zugriffsroutine auf, die ereignisgesteuert versucht, Zugriff auf den Bus zu erhalten. Sobald der Bus frei ist, werden die entsprechenden Informationsdaten übertragen. In dem vorliegenden Beispiel ist das Buszugriffsverfahren nach CSMA/CD+AMP (Carrier Sense Multiple Access with Collision Detection an Arbitration on Message Priority) festgelegt. Wie aus Figur 2 zu entnehmen ist, können beispielsweise über die Kommunikationsschnittstelle 9 von dem Sender S_{A} Kommunikationsprotokolle A1, A2,..., die jeweils acht ein Byte lange Audiodaten enthalten, gesendet werden. Da es sich um ein asynchrones Kommunikationsverfahren handelt, mit einem ereignisgesteuerten Zugriff, kann der Bus zum Zeitpunkt der Sendeanforderung bereits durch ein anderes Steuertelegramm, ST1, ST2, belegt sein. Weiterhin können Verzögerungen durch Fehlernachrichten, sowie durch einen verlorenen Buszugriff, entstehen. Zur Reduzierung der unerwünschten Verzögerungen zwischen zwei aufeinander folgenden Audiotelegrammen werden die Kommunikationsprotokolle A1, A2, .... (Audionachrichten) mit einer hohen Priorität versehen, so dass bei einer zeitgleichen Sendeanforderung mehrerer Steuereinheiten, nämlich von Steuerdaten enthaltende Kommunikationsprotokoll ST1, ST2 und die Audiodaten enthaltende Kommunikationsprotokolle A1, A2,..., die Nachricht mit der höchsten Priorität, nämlich das Kommunikationsprotokoll A1, A2, ..., den Buszugriff bekommt. Wie aus Figur 2 ersichtlich ist, erfolgt ein Buszugriff des Kommunikationsprotokoll ST1 vor dem die Audiodaten enthaltenden Kommunikationsprotokoll A2, weil jenes Protokoll ST1 früher anliegt als das Protokoll A2. Ein weiteres Steuerdaten-Kommunikationsprotokoll ST2 liegt jedoch gleichzeitig mit einem Audiodaten-Kommunikationsprotokoll A4 an, so dass die höhere Priorität des Audiodaten-Kommunikationsprotokolls A4 zur Anwendung kommt und dieses Protokoll auf den Bus gegeben wird und erst nachher das Steuerdaten-Kommunikationsprotokoll ST2.

Die somit asynchron auf den Bus 2 gegebenen Kommunikationsprotokolle A1, A2, A3 etc. werden von dem entsprechenden Empfänger E_{A} empfangen und in dem Audiodaten-Sammelspeicher 13 zwischengespeichert. Erst nach Ablauf einer vorgegebenen Verzögerungszeit t_{V} erfolgt die Ausgabe der Audiodaten an die entsprechende Ausgabeeinheit A, insbesondere an die Lautsprecher 12. Die Verzögerungszeit t_{V} wird durch die programmgesteuerte Adressierung des Schreibzeigers 14 und des Lesezeigers 15 im Audiodaten-Sammelspeicher 13 festgelegt. In dem vorliegenden Ausführungsbeispiel entspricht der Abstand zwischen dem Schreibzeiger 14 und dem Lesezeiger 15 dem Inhalt von fünf Kommunikationsprotokollen A1, A2, A3, A4, A5. Die Verzögerungszeit t_{V}, um die die Audiosignale zeitlich versetzt ausgegeben werden, liegt im Bereich von ca. 10 ms, die für Sprach- und Musikdaten ohne Weiteres in Kauf genommen werden kann. Durch die Zwischenspeicherung im Audiodaten-Sammelspeicher 13 kann nunmehr zeitkontinuierlich eine Übergabe der in den Protokollen A1, A2 etc. enthaltenen Audiodaten erfolgen.

Zur Synchronisation der Taktgeber 5 der jeweiligen Kommunikationsteilnehmer 1 sendet ein bestimmter Kommunikationsteilnehmer 1 ein Synchronisationsprotokoll, das die Adressierung des Schreibzeigers 14 relativ zu dem Lesezeiger 15 festlegt. Hierdurch kann insbesondere bei einem Ansprechen von mehreren Empfängern E_{A} ein unerwünschtes Knackgeräusch infolge eines Überholens des Schreibzeigers 14 oder des Lesezeigers 15 verhindert werden.

Alternativ kann die Synchronisation auch durch ein die Audiodaten enthaltenden Kommunikationsprotokoll erfolgen. Diesbezüglich weist das Kommunikationsprotokoll entsprechende zusätzliche Synchronisationsdaten auf. Zur Initiierung solcher Synchronisationsdaten kann das Überschreiten des Abstandes zwischen dem Schreibzeiger 14 und dem Lesezeiger 15 über einen vorgegebenen Schwellwert dienen. Sobald dieser Schwellwert überschritten ist, sendet der entsprechende Empfänger Eₐ ein Synchronisationsprotokoll, das über den Bus 2 die übrigen Empfänger E erreicht und dort zu einer Eigensynchronisation führen kann.

Der Schreibzeiger 14 und der Lesezeiger 15 werden zyklisch und im festen zeitliche Abstand zueinander angesteuert, so dass nacheinander die einzelnen Speicherzellen des Audiodaten-Sammelspeichers 13 angesprochen werden. Der Audiodaten-Sammelspeicher 13 ist als flüchtiger Speicher (RAM) ausgebildet.

## Patentansprüche

1. Kommunikationssystem für Fahrzeuge mit mehreren über einen seriellen Bus miteinander verbundenen Kommunikationsteilnehmern, die jeweils eine Steuereinheit zum Senden und/oder Empfangen von Informationsdaten und eine Kommunikationsschnittstelle aufweisen, wobei die Informationsdaten in einem Kommunikationsprotokoll übertragen werden und wobei das Kommunikationsprotokoll Kennungsdaten aufweist, anhand derer die Zuordnung der Informationsdaten zu den jeweiligen Kommunikationsteilnehmern erfolgt, **dadurch gekennzeichnet, dass** mindestens zwei Kommunikationsteilnehmer (1, S_{A}, E_{A}) mit einer elektrischen Eingabeeinheit (E, 8) oder Ausgabeeinheit (A, 12) gekoppelt sind zur Eingabe bzw. Ausgabe von Audiodaten, die als Informationsdaten von einer Steuereinheit (3) eines Kommunikationsteilnehmers (1, S_{S}, S_{A}, E_{A}) über den Bus (2) zu einer Steuereinheit (3) eines anderen Kommunikationsteilnehmers (1, S_{A}, E_{A}) übertragbar sind, und dass zumindest der Steuereinheit (3) desjenigen Kommunikationsteilnehmers (1, E_{A}), der die Audiodaten empfangen soll, ein Audiodaten-Sammelspeicher (13) zugeordnet ist, der derart ansteuerbar ist, dass die in einer vorgegebenen Anzahl von Kommunikationsprotokollen (A1, A2) enthaltenen empfangenen Audiodaten zwischengespeichert sind und dass die Audiodaten nach einer vorgegebenen Verzögerungszeit (t_{V}) an die Ausgabeeinheit (12) übertragen werden.

2. Kommunikationssystem nach Anspruch 1, **dadurch gekennzeichnet, dass** der Bus (2) mit einer Mehrzahl von jeweils mit einem Audiodaten-Sammelspeicher (13) ausgestatteten Kommunikationsteilnehmern (1, E_{A}) gekoppelt ist.

3. Kommunikationssystem nach Anspruch 1 oder 2, **dadurch gekennzeichnet, dass** der Audiodaten-Sammelspeicher (13) als flüchtiger Speicher (RAM) ausgebildet ist, der mittels einer Zugriffssteuerroutine beschreibbar und lesbar ist.

4. Kommunikationssystem nach einem der Ansprüche 1 bis 3, **dadurch gekennzeichnet, dass** der Audiodaten-Sammelspeicher (13) als digitaler Stapelspeicher ausgebildet ist, aus dem die Audiodaten in der Reihenfolge ihres Abspeicherns nach der Verzögerungszeit (t_{V}) ausgelesen werden.

5. Kommunikationssystem nach einem der Ansprüche 1 bis 4, **dadurch gekennzeichnet, dass** der Zugriff auf den Stapelspeicher (13) mittels eines programmgemäß adressierbaren Schreibzeigers (14) und eines programmgemäß adressierbaren Lesezeigers (15) erfolgt, wobei der Lesespeicher (15) um die Verzögerungszeit (t_{V}) später auf eine das eingeschriebene Audiodaten enthaltene Speicherquelle zugreift.

6. Kommunikationssystem nach einem der Ansprüche 1 bis 5, **dadurch gekennzeichnet, dass** die Kommunikationsschnittstelle (9) eine Zugriffsroutine aufweist, mittels derer der Zugriff auf den Bus (2) ereignisgesteuert ist, wobei in Abhängigkeit vom Ende des Kommunikationsprotokolls (A1, A2, ST1, ST2) ein Freigabesignal erzeugt wird zur Übergabe des Kommunikationsprotokolls (A1, A2, ST1, ST2) von der Steuereinheit (3) zu dem Bus (2).

7. Kommunikationssystem nach einem der Ansprüche 1 bis 6, **dadurch gekennzeichnet, dass** das die Audiodaten enthaltende Kommunikationsprotokoll (A1, A2) eine höhere Zugriffspriorität zu dem Bus (2) aufweist als das Steuerdaten enthaltende Kommunikationsprotokoll (ST1, ST2).

8. Kommunikationssystem nach einem der Ansprüche 1 bis 7, **dadurch gekennzeichnet, dass** die Steuereinheiten (3) jeweils einen Prozessor aufweisen, der durch einen eigenen Taktgeber (5) getaktet wird, und dass in einem vorgegebenen Zeitabstand von einer Steuereinheit (3) eines Kommunikationsteilnehmers (1) ein Synchronisationsprotokoll erzeugt und an den Bus (2) übergeben wird zur Weiterleitung an die weiteren Kommunikationsteilnehmer (1).

9. Kommunikationssystem nach einem der Ansprüche 1 bis 8, **dadurch gekennzeichnet, dass** der Schreibzeiger (14) und der Lesezeiger (15) derart angesteuert werden, dass die entsprechenden Speicherzellen des Audiodaten-Sammelspeichers (13) nacheinander und zyklisch angesprochen werden.

10. Kommunikationssystem nach eine der Ansprüche 1 bis 9, **dadurch gekennzeichnet, dass** der Bus (2) als CAN-Bus ausgebildet ist.
